# EUROPEAN PATENT APPLICATION

(11) **EP 3 680 561 A1**
(43) Date of publication of application: **15.07.2020**
(21) Application number: 19151566.7
(22) Date of filing: 14.01.2019
(51) Int. Cl.: F24C 15/32

(54) **A WATER GUIDING APPARATUS AND STEAM GENERATING APPARATUS COMPRISING THE SAME**

(71) Applicant: Koninklijke Philips N.V., 5656 AG Eindhoven (NL)
(72) Inventor: TE VELDE, Mart Kornelis-Jan, 5656 AE Eindhoven (NL); TOONEN, Stefan Johannes Hendrikus, 5656 AE Eindhoven (NL); BESTBIER, Andre, 5656 AE Eindhoven (NL)
(74) Representative: de Haan, Poul Erik

(57) **Abstract**

A water guiding apparatus (60, 300, 400, 500, 600, 700, 800, 900) for use in conjunction with a heating element (20, 21, 22, 23, 24, 25, 26, 27) configured at least for convection heating in a cooking device (100). The water guiding apparatus is configured to guide water in the cooking device. During use, the water guiding apparatus is configured to be coupled to the heating element such that at least one of the water guiding apparatus and the guided water is in direct contact with the heating element to allow heat transfer from the heating element to the water for generating steam.

## Description

### FIELD OF THE INVENTION

The present disclosure relates to a water guiding apparatus for use in conjunction with a heating element configured at least for convection heating in a cooking device. The present disclosure also relates to a steam generating apparatus comprising a water guiding apparatus and a heating element.

### BACKGROUND OF THE INVENTION

Combined convection and steamer ovens, which are hybrids of conventional convection ovens and steamers, have been increasingly popular in the food service and cooking industry due to shortened cooking times required and the quality of food that can be achieved with the combination of cooking techniques. Because of the ability of these combined ovens to retain moisture and flavor in foods compared to conventional ovens and microwave ovens, it is much easier to avoid problems such as overcooking, drying, and shrinkage of food in combined ovens. Moreover, nutrients such as vitamins and minerals are less prone to degradation when foods are cooked with steam, compared to many other cooking methods.

Currently known combined convection and steamer ovens typically include a cooking compartment that can be operated in conjunction with a convection heating component and a steam generating component. Each of the convection heating component and the steam generating component comprises a respective heater, a respective temperature control unit, and a respective safety circuit. For example, many combined convection and steamer ovens comprise a convection air heat source similar to a conventional oven, as well as a steam generating system which includes an auxiliary heat source to generate steam.

### SUMMARY OF THE INVENTION

There are a number of disadvantages associated with the currently available combined convection and steamer ovens. For example, since these types of ovens usually require separate heating components, separate control components, and/or separate safety components respectively for convection heating and for steam generation, size and cost concerns can become significant. It would therefore be advantageous to provide a water guiding apparatus that can be used in conjunction with a heating element configured at least for convection heating in a cooking device, and a steam generating apparatus including the water guiding apparatus and a heating element. In this way, the manufacturing and maintenance costs associated with the cooking device can be reduced because only a single heating component and associated controls and safety features are required to achieve both convection heating and steam generation functionalities.

To better address one or more of the concerns mentioned earlier, in a first aspect, there is provided a water guiding apparatus for use in conjunction with a heating element configured at least for convection heating in a cooking device. The water guiding apparatus is configured to guide water in the cooking device. Also, during use, the water guiding apparatus is configured to be coupled to the heating element such that at least one of the water guiding apparatus and the guided water is in direct contact with the heating element to allow heat transfer from the heating element to the water for generating steam.

In some embodiments, the water guiding apparatus may further comprise a water channel configured to guide water along at least a part of the length of the heating element.

In some embodiments, the water guiding apparatus may further comprise one or more cavities configured to accommodate at least a part of the heating element.

In some embodiments, the water guiding apparatus may further comprise a plate element configured to align with the heating element when the water guiding apparatus is coupled to the heating element. The plate element may be configured to contain the water to be guided along at least a part of the heating element. In some of these embodiments, the plate element may be arranged such that it is located directly above the heating element, and the water channel may be arranged at the plate element such that water is guided along a part of the length of the heating element that is adjacent to the water channel when the water guiding apparatus is coupled to the heating element. In some alternative embodiments, the plate element may be arranged such that it is located directly underneath the heating element.

In some embodiments, the water channel may be further configured to at least partially accommodate the at least part of the length of the heating element, such that when the water guiding apparatus is coupled to the heating element, water is guided along an underside of the part of the length of the heating element.

In some embodiments, the water channel may comprise a protruding element extending along at least a part of its length. The protruding element may be configured to support at least a part of the length of the heating element when it is accommodated in the water channel.

In some embodiments, the water guiding apparatus may further comprise a hinge unit configured to removably attach the plate element to the heating element.

In some embodiments, the water guiding apparatus may further comprise a fastening unit configured to hold the plate element and the heating element in place when the plate element is aligned with the heating element.

In some embodiments, the water guiding apparatus may further comprise a conduit element configured to align along at least a part of the length of the heating element while the water guiding apparatus is coupled to the heating element, so as to guide water along at least a part of the heating element. In some of these embodiments, the conduit element may be open-faced.

In a second aspect, there is provided a steam generating apparatus for use in a cooking device. The steam generating apparatus comprises: the water guiding apparatus as described according to the first aspect, and a heating element configured at least for convection heating in the cooking device.

In some embodiments, the steam generating apparatus may further comprise a control unit configured to control the heating element based on at least one of a user input and a rate of water flow at the water guiding apparatus.

In some embodiments, the steam generating apparatus may further comprise a lime scale collection unit connected to the water guiding apparatus, the lime scale collection unit being configured to collect lime scale from the water guiding apparatus.

According to the aspects and embodiments described above, the limitations of existing techniques are addressed. In particular, the above-described aspects and embodiments enable cooking devices to realize both convection cooking and steam cooking functions without requiring separate heating units, separate temperature controls, or separate safety components. There is thus provided a way of implementing more compact combined convection and steamer cooking devices with reduced manufacturing and maintenance costs. These and other aspects of the disclosure will be apparent from and elucidated with reference to the embodiment(s) described hereinafter.

### BRIEF DESCRIPTION OF THE DRAWINGS

For a better understanding of the embodiments, and to show more clearly how they may be carried into effect, reference will now be made, by way of example only, to the accompanying drawings, in which:
Fig. 1 is a diagram of a combined convection and steamer cooking oven according to an embodiment;
Fig. 2 is a schematic diagram of the combined convection and steamer cooking oven of Fig. 1;
Fig. 3A is a perspective view of a water guiding apparatus and a heating element according to an embodiment;
Fig. 3B is a cross-sectional view of the water guiding apparatus and the heating element of Fig. 3A;
Fig. 4A is a perspective view of a water guiding apparatus and a heating element according to another embodiment;
Fig. 4B is a cross-sectional view of the water guiding apparatus and the heating element of Fig. 4A;
Fig. 5 is a cross-sectional view of a water guiding apparatus and a heating element according to another embodiment;
Fig. 6A is a perspective view of a water guiding apparatus and a heating element according to another embodiment;
Fig. 6B is a cross-sectional view of the water guiding apparatus and the heating element of Fig. 6A;
Fig. 7A is a perspective view of a water guiding apparatus and a heating element according to another embodiment;
Fig. 7B is a cross-sectional view of the water guiding apparatus and the heating element of Fig. 7A;
Fig. 8 is a cross-sectional view of a water guiding apparatus and a heating element according to another embodiment;
Fig. 9A is a perspective view of water guiding apparatus and a heating element according to another embodiment; and
Fig. 9B is a cross-sectional view of the water guiding apparatus and the heating element of Fig. 9A.

### DETAILED DESCRIPTION OF EMBODIMENTS

As noted above, there is provided a water guiding apparatus and a steam generating apparatus which address the existing problems.

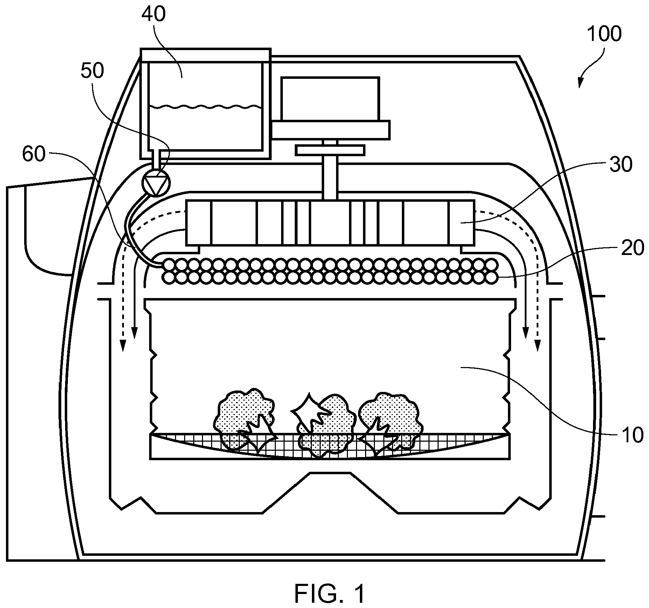

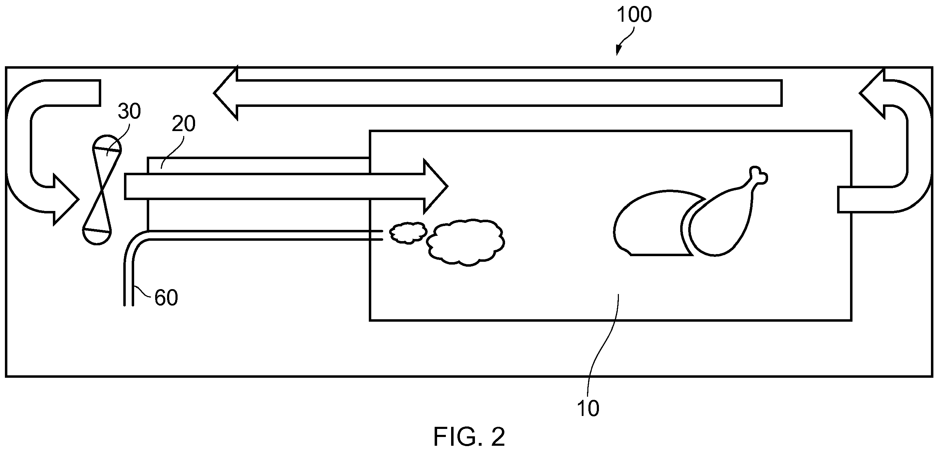

Fig. 1 and Fig. 2 are diagrams of a combined convection and steamer cooking oven 100 according to an embodiment, which will be referred to herein as the "cooking oven". In more detail, Fig. 1 is a front perspective view of the cooking oven 100 according to one implementation while Fig. 2 is a side cross-sectional view of the cooking oven 100 according to a different implementation.

As shown in Fig. 1, the cooking oven 100 comprises a cooking compartment 10, a heating element 20, a fan 30, a water reservoir 40, a pump 50, and a water guiding apparatus 60. The cooking compartment 10 is an enclosed space in which food item(s) can be placed. Although not shown in the drawings, a door may be installed on a front-facing side of the cooking compartment 10 to expose or close an opening through food items can be inserted into or taken out of the cooking compartment 10. Therefore, the cooking compartment 10 may be defined by the door and inner walls arranged in an inner side of the cooking oven 100. In some embodiments, heat insulating material maybe provided at the cooking compartment 10. Similar components of the cooking oven 100 are illustrated in Fig. 2, with the exception that the water reservoir 40 and the pump 50 are not shown in the drawing. It will however be understood that the implementation of Fig. 2 may also include the water reservoir and the pump.

According to the implementation shown in Fig. 1, the heating element 20 is arranged above the cooking compartment 10 and underneath the fan 30. In this arrangement, the fan 30 is rotationally driven by a motor (not labelled in the drawing) and is configured to perform convection in a downward direction. The air flow caused by rotational movement of the fan 30 travels downwards towards the heating element 20 which then heats the air flow before it enters the cooking compartment 10 for heating the food item(s) placed within. A different configuration of the heating element with respect to the fan and the cooking compartment is shown in Fig. 2, in which the fan 30 is arranged at a back side of the cooking oven 100 while the heating element 20 is arranged between the fan 30 and the cooking compartment 10. In this configuration, the fan 30 may be configured to perform convection in a direction towards a front side of the cooking oven 100. The general direction of air flow is in fact demonstrated by the arrows in Fig. 2. While in operation, the fan 30 can cause air flow from a back side of the cooking oven (where the heating element 20 is located) towards a front side (where the cooking compartment 10 is located). This way, the air flow is heated by the heating element 20 before it enters the cooking compartment 10 for heating the food item(s) inserted within.

As shown in Fig. 1, the water reservoir 40 is configured to store water while the pump 50 is connected between the water reservoir 40 and the heating element 20 so as to deliver water from the water reservoir 40 towards the heating element 20 via a pumping operation. In more detail, the pump 50 is configured to deliver water towards the heating element 20 using the water guiding apparatus 60 which is at least partly positioned adjacent to the heating element 20. Referring now to Fig. 2, although the water reservoir and the pump are not shown in this drawing it will be appreciated that the water guiding apparatus 60 can be configured to guide water in the cooking oven 10 from the water reservoir (with or without the aid of a water pump such as pump 50 shown in Fig. 1) inside the cooking oven 100. Specifically, the water guiding apparatus 60 is configured to be in direct contact with the heating element 20 such that heat is transferred from the heating element 20 to the water by conduction for generating steam. The generated steam at the water guiding apparatus 60 can then be directed towards the cooking compartment 10 or injected into the cooking compartment 10 for the purpose of steam-cooking the food item(s) inserted within. For example, in the implementation as shown in Fig. 2, the generated steam at the water guiding apparatus 60 is expelled at an opening of the water guiding apparatus 60 that is connected to the cooking compartment 10. By using the water guiding apparatus 60 to guide water towards the heating element 20 for steam generation, both the steam generating function and the convection cooking function of the cooking oven 100 make use of the same heating element 20. Hence, the cooking oven 100 can be manufactured in a more cost-effective and space-efficient manner. Moreover, since the dual-function cooking oven 100 according to the present embodiment only requires a single heating element 20, only one respective temperature control and respective safety component (not shown in the drawings) are required.

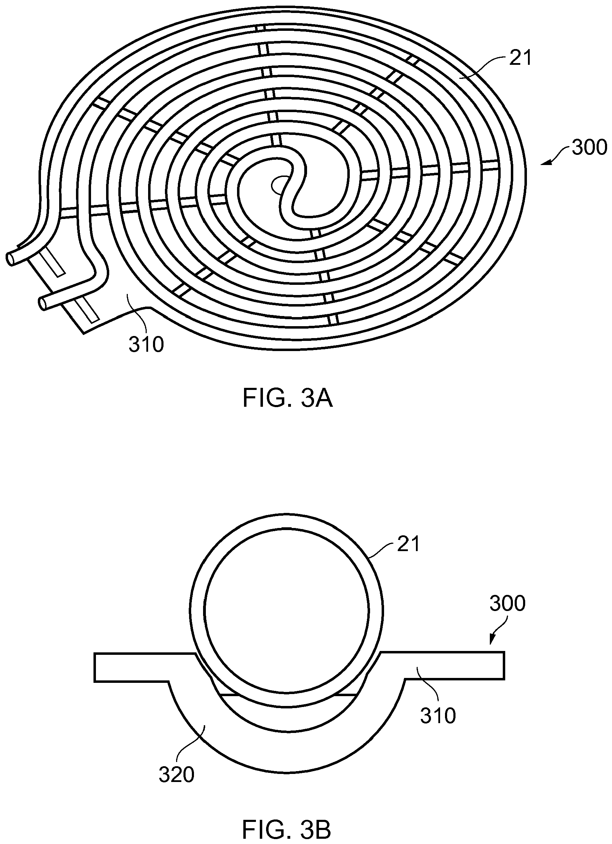

Although the water guiding apparatus 60 is shown in Fig. 1 and Fig. 2 as a water tube or water channel type component, it will be appreciated that the water guiding apparatus 60 may be practically implemented in a number of different embodiments. These embodiments will be explained in more detail with reference to Fig. 3 to Fig. 9 below. In some embodiments, the water guiding apparatus may comprise a water channel configured to guide water along at least a part of the length of the heating element. In some embodiments, the water guiding apparatus may comprise one or more cavities configured to accommodate at least a part of the heating element.

In some embodiments, the water guiding apparatus may comprise a plate element configured to align with the heating element when the water guiding apparatus is coupled to the heating elemeny. In these embodiments, the plate element may be configured to contain the water to be guided along at least a part of the heating element. In addition, in these embodiments, the plate element maybe arranged such that it is located directly above the heating element. The water channel in such embodiments may be arranged at the plate element such that water is guided along a part of the length of the heating element that is adjacent to the water channel when the water guiding apparatus is coupled to the heating element. In some embodiments, the water channel may be further configured to at least partially accommodate the at least part of the length of the heating element, such that when the water guiding apparatus is coupled to the heating element, water is guided along an underside of the part of the length of the heating element. In some embodiments, the plate element may be arranged such that it is located directly underneath the heating element. In some embodiments, the water channel may comprise a protruding element extending along at least a part of its length. The protruding element may be configured to support at least a part of the length of the heating element when it is accommodated in the water channel. In some embodiments, the water guiding apparatus may further comprise a hinge unit configured to removably attach the plate element to the heating element. In some embodiments, the water guiding apparatus may further comprise a fastening unit configured to hold the plate element and the heating element in place when the plate element is aligned with the heating element.

In some embodiments, the water guiding apparatus may comprise a conduit element configured to align along at least a part of the length of the heating element when the water guiding apparatus is coupled to the heating element, so as to guide water along at least a part of the heating element. In these embodiments, the conduit element may be open-faced.

It will therefore be understood that the manner in which steam generated at these different embodiments of water guiding apparatuses can be delivered towards the cooking compartment 10 of the cooking oven 10 in ways different from what is shown in Fig. 2. This will be explained in further detail in the following.

It will be appreciated that although the water guiding apparatus is described above in the context of a cooking oven, the water guiding apparatus as described herein may be implemented in other types of cooking devices, such as an air fryer.

Fig. 3A is a perspective view of a water guiding apparatus 300 and a heating element 21 according to an embodiment, and Fig. 3B is a cross-sectional view of the water guiding apparatus 300 and the heating element 21 of Fig. 3A. The water guiding apparatus 300 in this embodiment comprises a plate element 310 and a water channel 320, and the heating element 21 comprises a flat spiraling heating coil having a similar (but slightly smaller) diameter to that of the plate element 310 of the water guiding apparatus 300, and it may be provided as a component of a cooking device (e.g. a cooking oven).

As shown in Fig. 3A, the plate element 310 of the water guiding apparatus 300 in the present embodiment is a circular disc element that is configured to align with the heating element 21 when the water guiding apparatus 300 is coupled to the heating element. Also, when the water guiding apparatus 300 in coupled to the heating element 21, the plate element 310 is arranged such that it is located directly underneath the heating element 21. The water channel 320 is formed at the plate element 310 of the water guiding apparatus 300, and has a spiraling path along an upper surface of the plate element 310 that corresponds to the spiraling shape of the heating element 21. Hence, when the plate element 310 is aligned with the heating element 21 of the cooking device, at least a part of the spiraling shape of the heating element 21 can be accommodated in the water channel 320 as illustrated in Fig. 3B. Thus, while the water guiding apparatus 300 is in use, water can be guided along the water channel 320 as well as along an underside of the heating element 21 such that heat is transferred from the heating element 21 to the water by conduction for generating steam. The generated steam can escape directly from the water channel 320 and subsequently directed towards the cooking compartment by way of a guide component (not shown in the drawing) or injected into the cooking compartment by way of an injection component (not shown in the drawing).

Although not shown in the drawings, in some embodiments the water guiding apparatus 300 may further comprise a fastening unit configured to hold the plate element 310 an the heating element 21 in place when the plate element 310 is aligned with the heating element 21. In addition, although not shown in the drawings, in some embodiments the water guiding apparatus 300 may further comprise hinge unit configured to removably attach the plate element 300 to the heating element 21. Therefore, while the water guiding apparatus 300 is in use the plate element 310 and the heating element 21 may be held in place; when a user wishes to clean the water guiding apparatus 300, the user may manipulate the hinge unit so as to allow the plate element 300 to be detached from the heating element 21 to be cleaned. Moreover, in some embodiments, the hinge unit may be made of insulating material and arranged at the water guiding apparatus 300 such that it serves as an electrical insulator between the plate element 310 and the heating element 21.

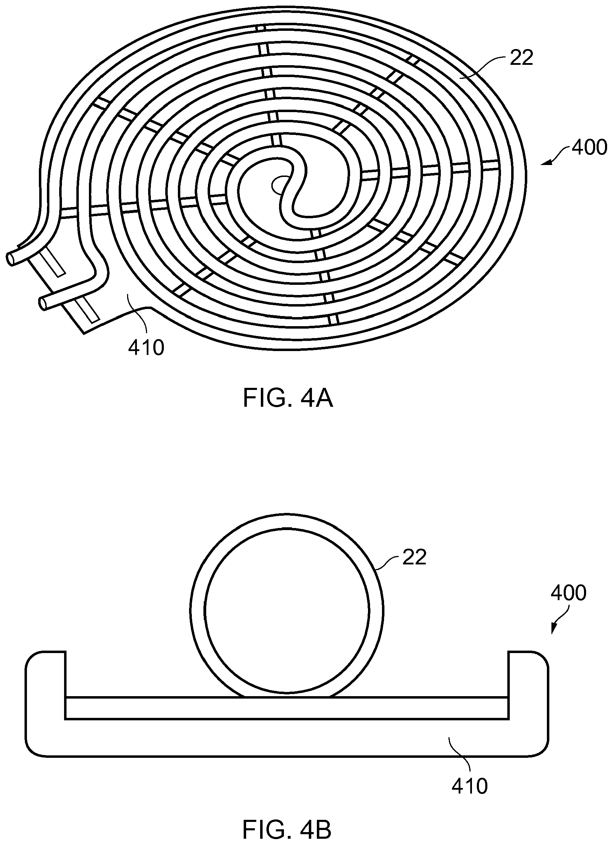

Fig. 4A is a perspective view of a water guiding apparatus 400 and a heating element 22 according to an embodiment, and Fig. 4B is a cross-sectional view of the water guiding apparatus 400 and the heating element 22 of Fig. 4A. The water guiding apparatus 400 in this embodiment is similar to the embodiment as shown in Fig. 3A and Fig. 3B, with the only difference that the water guiding apparatus 400 of the present embodiment only comprises a plate element 410 and not a water channel. The heating element 22 comprises a flat spiraling heating coil having a similar (but slightly smaller) diameter to that of the plate element 410 of the water guiding apparatus 400, and it may also be provided as a component of a cooking device (e.g. a cooking oven).

As shown in Fig. 4A, the plate element 410 of the water guiding apparatus 400 in the present embodiment is a circular disc element that is configured to align with the heating element 21 when the water guiding apparatus 300 is coupled to the heating element 22. Also, when the water guiding apparatus 400 is coupled to the heating element 22, the plate element 410 is arranged such that it is located directly underneath the heating element 22. As shown in Fig. 4B, the plate element 410 of the water guiding apparatus 400 is further configured to contain water to be guided along at least a part of the heating element 22. Specifically, the plate element 410 is configured to contain water to be guided along an underside of the heating element 22 such that heat is transferred from the heating element 22 to the water by conduction for generating steam. This is clearly illustrated in Fig. 4B. The generated steam can escape directly from the plate element 410 and subsequently directed towards the cooking compartment by way of a guide component (not shown in the drawing) or injected into the cooking compartment by way of an injection component (not shown in the drawing).

Although not shown in the drawings, in some embodiments the water guiding apparatus 400 may further comprise a fastening unit configured to hold the plate element 410 an the heating element 22 in place when the plate element 410 is aligned with the heating element 22. In addition, although not shown in the drawings, in some embodiments the water guiding apparatus 400 may further comprise hinge unit configured to removably attach the plate element 400 to the heating element 22. Therefore, while the water guiding apparatus 400 is in use the plate element 410 and the heating element 22 may be held in place; when a user wishes to clean the water guiding apparatus 400, they may manipulate the hinge unit so as to allow the plate element 400 to be detached from the heating element 22 to be cleaned. Moreover, in some embodiments, the hinge unit may be made of insulating material and arranged at the water guiding apparatus such that it serves as an electrical insulator between the plate element 410 and the heating element 22.

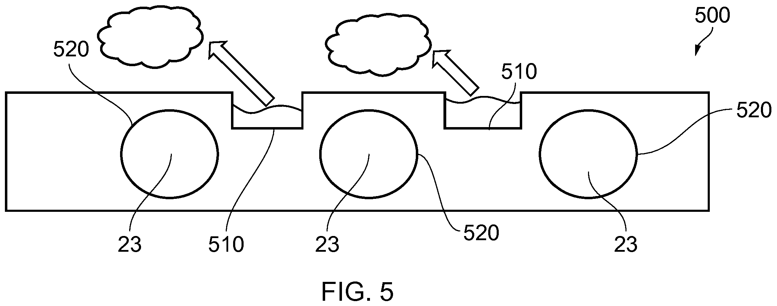

Fig. 5 is a cross-sectional diagram of a water guiding apparatus 500 and a heating element 23 according to another embodiment. The water guiding apparatus 500 in this embodiment is provided in the form of an aluminum block comprising a water channel 510 and a plurality of cavities 520. The heating element 23 of this embodiment comprises a flat spiraling heating coil having diameter smaller than a width of the water guiding apparatus 500, and it may be provided as a component of a cooking device (e.g. a cooking oven). In a practical implementation, the heating element 23 may be embedded in the water guiding apparatus 500, such that at least some of the parts of the heating element 23 are accommodated in the plurality of cavities 520 provided at the water guiding apparatus 500.

The water channel 510 of the water guiding apparatus forms a spiraling path along an upper surface of water guiding apparatus 500 that corresponds to the spiraling shape of the heating element 23. In more detail, the water channel 510 in this embodiment is configured such that it runs adjacent to the spiraling length of the heating element 23. Therefore, referring to Fig. 5, the two water channel parts 510 illustrated are both arranged between concentric spiral parts of the heating element 23. This way, when the water guiding apparatus 500 is in use, water can be guided along the water channel 510 at the upper surface of the water guiding apparatus 500 while heat is transferred by conduction from the heating element 23 through the aluminium material of the water guiding apparatus 500 to the water being guided along the water channel 510 so that steam can be generated. The generated steam can escape directly from the water channel 510 and subsequently directed towards the cooking compartment by way of a guide component (not shown in the drawing) or injected into the cooking compartment by way of an injection component (not shown in the drawing).

Although it is described above that the water guiding apparatus 500 is provided in the form of an aluminium block, in alternative embodiments other materials may be used for the manufacture of the water guiding apparatus.

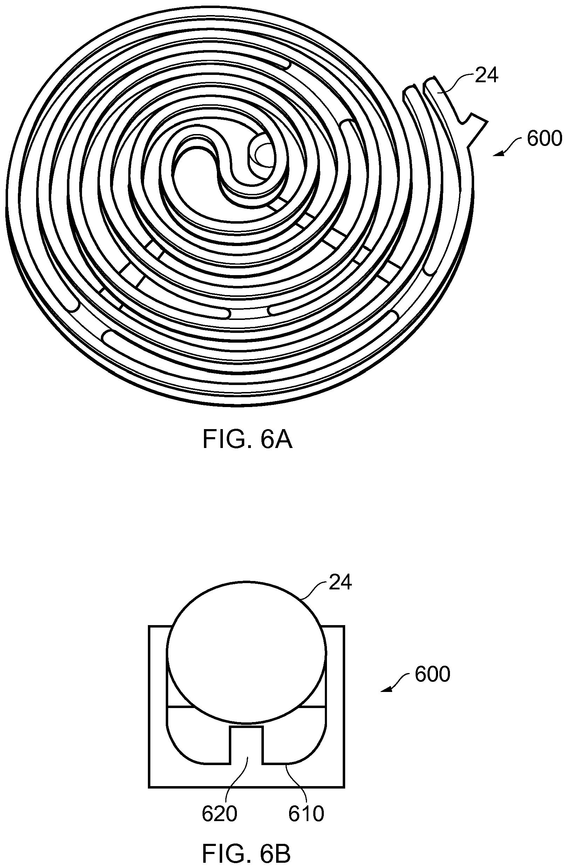

Fig. 6A is a perspective view of a water guiding apparatus 600 and a heating element 24 according to an embodiment, and Fig. 6B is a cross-sectional view of the water guiding apparatus 600 and the heating element 24 of Fig. 6A. The heating element 24 in this embodiment comprises a flat spiraling heating coil, and it may be provided as a component of a cooking device (e.g. a cooking oven). Furthermore, as shown in Fig. 6B, the water guiding apparatus 600 is configured to align with the heating element 24 when the water guiding apparatus 600 is coupled to the heating element 24, with the water guiding apparatus 600 being arranged such that it is located directly underneath the heating element 24.

The water guiding apparatus 600 in this embodiment is provided in a shape which corresponds to the spiraling shape of the heating element 24, and the water guiding apparatus 600 comprises a water channel 610 running along its length. Hence, when the water guiding apparatus 600 is aligned with the heating element 24 of the cooking device, at least a part of the spiraling shape of the heating element 24 can be accommodated in the water channel 610, as illustrated in Fig. 6B. Moreover, the water channel 610 further comprises a protruding element 620 extending along its length. The protruding element 620 is configured to support at least a part of the heating element 24 which is (at least partly) accommodated in the water channel 610 so as to allow sufficient space between the heating element 24 and an inner bottom surface of the water channel 610 for water flow.

Thus, while the water guiding apparatus 600 is in use, water flowing along water channel 610 can be guided along an underside of the heating element 24 such that heat is transferred directly from the heating element 24 to the water by conduction for generating steam. The generated steam may be directed via the water channel 610 through to an end (not shown in the drawing) of the water channel 610 which is connected to a cooking compartment of the cooking device, and/or escape from the water guiding apparatus 600 and then directed towards the cooking compartment by way of a guide component (not shown in the drawing).

Although it is described with reference to the embodiment above that the water channel further comprises a protruding element, in some alternative embodiments the water channel may not comprise a protruding element. In these embodiments, the cross-sectional shape of the water channel may be configured in such a way so as to ensure there is sufficient space between the heating element (partly) accommodated in the water channel and an inner bottom surface of the water channel for water flow.

Although it is described with reference to the embodiment above that the protruding element extends along the length of the water channel, in some alternative embodiments the protruding element may not extend along the whole length of the water channel. In these embodiment the protruding element may only extend along a part or parts of the length of the water channel as long as the support provided by the protruding element is sufficient for ensuring that there is sufficient space between the heating element (partly) accommodated in the water channel and an inner bottom surface of the water channel for water flow.

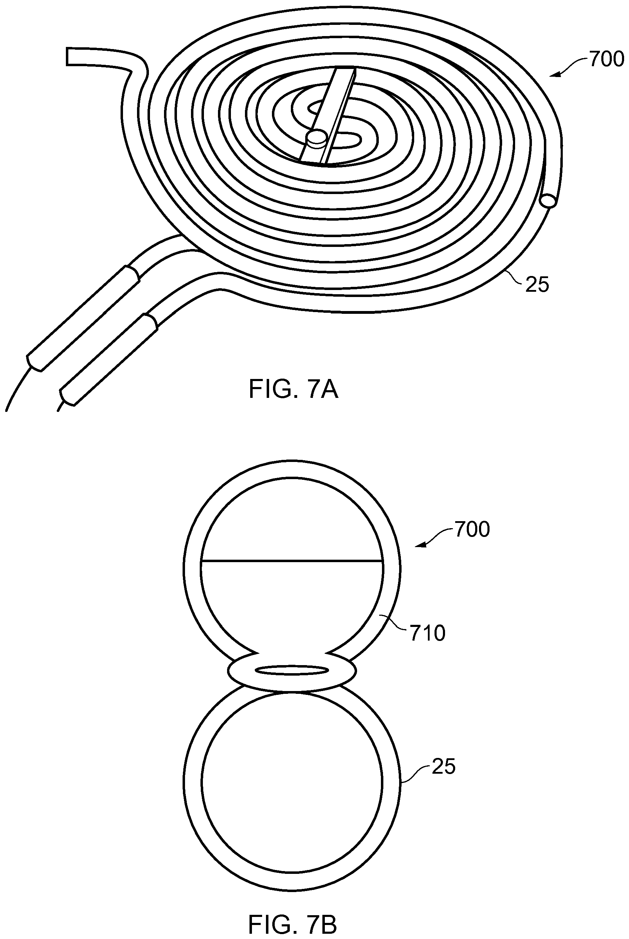

Fig. 7A is a perspective view of a water guiding apparatus 700 and a heating element 25 according to an embodiment, and Fig. 7B is a cross-sectional view of the water guiding apparatus 700 and the heating element 25 of Fig. 7A. The heating element 25 in this embodiment comprises a flat spiraling heating coil, and it may be provided as a component of a cooking device (e.g. a cooking oven). Furthermore, as shown in Fig. 7B, the water guiding apparatus 700 is configured to align with the heating element 25 when the water guiding apparatus 700 is coupled to the heating element 25, with the water guiding apparatus 700 being arranged such that it is located directly underneath the heating element 25.

The water guiding apparatus 700 in this embodiment comprises a conduit element 710 that is in a shape that corresponds to the spiraling shape of the heating element 25. In more detail, the conduit element 710 of the water guiding apparatus 700 is a tube element comprising a first end connected to a water supply (e.g. a water reservoir) and a second end connected to a cooking compartment of the cooking device, wherein the tube element adopts a shape so as to run along the length of the spiraling heating coil (i.e. the heating element 25). Therefore, while the water guiding apparatus 700 is in use, water can be guided along the conduit element 710 such that heat is transferred from the heating element 25 to the water flowing inside the tube element by conduction for generating steam. The generated steam may then escape from the second end of the conduit element 710 (i.e. the tube element) so as to be injected into the cooking compartment of the cooking device.

In some embodiments, the water guiding apparatus 700 may be fixedly attached to the heating element 25 by a soldering or welding process to as to ensure maximized contact between the water guiding apparatus 700 (and in particular the conduit element 710) and the heating element 25.

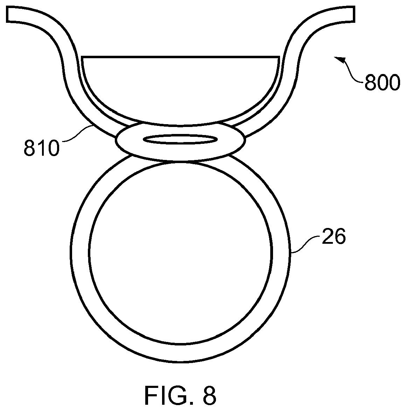

Fig. 8 is a cross-sectional view of a water guiding apparatus and a heating element 26 according to another embodiment. The water guiding apparatus 800 and the heating element 26 of the present embodiment are similar to those illustrated in Fig. 7A and Fig. 7B, with the only difference that the water guiding apparatus 800 comprises an open-faced conduit element 810 instead of a closed conduit element (i.e. a tube element). Therefore, it can be understood that although not shown in the drawing, the heating element 26 in this embodiment comprises a flat spiraling heating coil similar to the heating element 25 as shown in Fig. 7A, and that the water guiding apparatus 800 is configured to align with the heating element 26 when the water guiding apparatus 800 is coupled to the heating element 26, with the water guiding apparatus 800 being arranged such that it is located directly underneath the heating element 26.

Similar to the conduit element 710 shown in Fig. 7A and Fig. 7B, the open-faced conduit element 810 in this embodiment is provided in a shape that corresponds to the spiraling shape of the heating element 26. The conduit element 810 in this embodiment also comprises a first end connected to a water supply (e.g. a water reservoir) and a second end connected to a cooking compartment of a cooking device, wherein the open-faced conduit element 810 adopts a shape so as to run along the length of the spiraling heating coil (i.e. the heating element 26). Therefore, while the water guiding apparatus 800 is in use, water can be guided along the conduit element 810 such that heat is transferred from the heating element 26 to the water flowing inside the conduit element 810 by conduction for generating steam. The generated steam can then escape from the second end of the open-faced conduit element 810 so as to be injected into the cooking compartment of the cooking device. Alternatively or in addition, the generated steam can also escape from the open-face of the conduit element 810 and subsequently directed towards the cooking compartment by way of a guide component (not shown in the drawing)

In some embodiments, the water guiding apparatus 800 may be fixedly attached to the heating element 26 by a soldering or welding process so as to ensure maximized contact between the water guiding apparatus 800 (and in particular the conduit element 810) and the heating element 26.

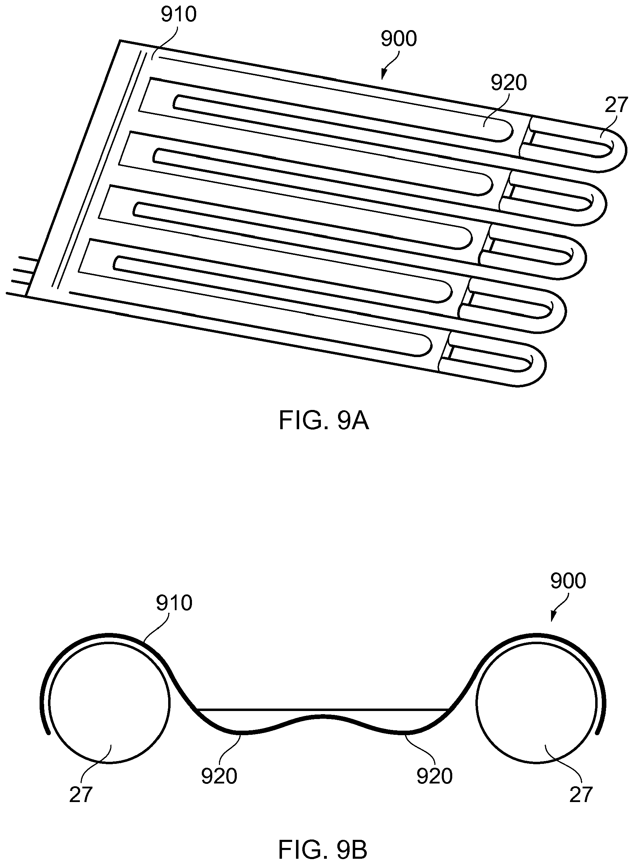

Fig. 9A is a perspective view of a water guiding apparatus 900 and a heating element 27 according to an embodiment, and Fig. 9B is a cross-sectional view of the water guiding apparatus 900 and the heating element 27 of Fig. 9A. The water guiding apparatus 900 in this embodiment comprises a plate element 910 and a water channel 920, and the heating element 27 comprises a flat zigzag heating coil which may be provided as a component of a cooking device (e.g. a cooking oven).

As shown in Fig. 9A, the plate element 910 of the water guiding apparatus 300 in the present embodiment is a rectangular disc element that is configured to align with the heating element 27 when the water guiding apparatus 900 is coupled to the heating element 27. Also, while the water guiding apparatus 900 is coupled to the heating element 27, the plate element 910 is arranged such that it is located directly above the heating element 27. The water channel 920 is formed at the plate element 910 of the water guiding apparatus 900 such that the shape of the plate element 910 is complementary to the zigzag shape of the heating element 27. Hence, when the plate element 910 is aligned with the heating element 27 of the cooking device, at least a part of the zigzag shape of the heating element 27 is complementarily coupled with the plate element 910 as illustrated in Fig. 9A and Fig. 9B. Thus, the thermal contact between the heating element 27 and the plate element 910 is maximized and while the water guiding apparatus 300 is in use, water can be guided along the water channel 920 as well as along parts of the heating element 27 such that heat is transferred from the heating element 27 to the water by conduction for generating steam. The generated steam can escape directly from the plate element 910 and directed towards a cooking compartment of the cooking device by way of a guide component (not shown in the drawing).

In any of the embodiments describe above, the water guiding apparatus may be made of aluminium or stainless steel.

Although not described above, in some embodiments the water guiding apparatus may further comprise a lime scale collection unit configured to collect lime scale. For example, in some embodiments the lime scale collection unit maybe arranged at an end of water channel of the water guiding apparatus so as to allow lime scale to be collected when descaling liquid is used at the water channel.

Although not shown in the drawings provided, in some embodiments there may be a steam generating apparatus provided for use in a cooking device. In these embodiments, the steam generating apparatus may comprise a water guiding apparatus of any of the embodiments described above, and a heating element configured at least for convection heating in the cooking device.

Also, in some of these embodiments, the steam generating apparatus may further comprise a control unit configured to control the heating element based on at least one of a user input and a rate of water flow at the water guiding apparatus. In some embodiments, the user input may be associated with a desired cooking temperature in the cooking compartment of the cooking device. In these embodiment, a sensor unit may be provided at the steam generating apparatus or the cooking device for detecting the rate of water flow at the water guiding apparatus. In some embodiments, the user input may be associated with a predetermined cooking program, for example a cooking program that is optimized for the preparation of a certain dish. The cooking program may include instructions with regard to at least one of a cooking technique (e.g. steaming) and a cooking temperature in the cooking compartment of the cooking device. In these embodiments, the cooking program may not necessarily require steam cooking. In some embodiments, the control unit may be further configured to control an output rate of a water pump (e.g. pump 50 shown in Fig. 1) based on at least one of the user input and a rate of water flow at the water guiding apparatus, so as to regulate an amount of water being delivered to the water guiding apparatus for steam generation. In some embodiments, based on a user input associated with a desired cooking temperature in the cooking compartment, the control unit may be configured to increase the water flow and the power provided to the heating element to regulate an amount of generated steam.

Moreover, in some embodiments the steam generating apparatus may further comprise a lime scale collection unit that is connected to the water guiding apparatus, the lime scale collection unit being configure to collect lime scale from the water guiding apparatus.

There is thus provided an improved water guiding apparatus and an improved steam generating apparatus, which overcome the existing problems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A water guiding apparatus (60, 300, 400, 500, 600, 700, 800, 900) for use in conjunction with a heating element (20, 21, 22, 23, 24, 25, 26, 27) configured at least for convection heating in a cooking device (100), wherein the water guiding apparatus is configured to guide water in the cooking device, and wherein during use, the water guiding apparatus is configured to be coupled to the heating element such that at least one of the water guiding apparatus and the guided water is in direct contact with the heating element to allow heat transfer from the heating element to the water for generating steam.

2. A water guiding apparatus (300, 500, 600, 900) according to claim 1, further comprising a water channel (320, 510, 610, 920) configured to guide water along at least a part of the length of the heating element (21, 23, 24, 27).

3. A water guiding apparatus (500) according to claim 1 or claim 2, further comprising one or more cavities (520) configured to accommodate at least a part of the heating element (23).

4. A water guiding apparatus (300, 400, 900) according to claim 1 or claim 2, further comprising a plate element (310, 410, 910) configured to align with the heating element (21, 22, 27) when the water guiding apparatus is coupled to the heating element, wherein the plate element is configured to contain the water to be guided along at least a part of the heating element.

5. A water guiding apparatus (900) according to claim 4 when dependent on claim 2, wherein the plate element (910) is arranged such that it is located directly above the heating element (27), and wherein the water channel (920) is arranged at the plate element such that water is guided along a part of the length of the heating element that is adjacent to the water channel when the water guiding apparatus is coupled to the heating element.

6. A water guiding apparatus (300, 600, 900) according to claim 2 or claim 4, wherein the water channel (320, 610, 920) is further configured to at least partially accommodate the at least part of the length of the heating element (21, 24, 27), such that when the water guiding apparatus is coupled to the heating element, water is guided along an underside of the part of the length of the heating element.

7. A water guiding apparatus (300, 400) according to claim 4 or claim 6 when dependent on claim 4, wherein the plate element (310, 410) is arranged such that it is located directly underneath the heating element (21, 22).

8. A water guiding apparatus (600) according to claim 6, wherein the water channel (610) comprises a protruding element (620) extending along at least a part of its length, wherein the protruding element is configured to support at least a part of the length of the heating element (24) when it is accommodated in the water channel.

9. A water guiding apparatus (60) according to claim 4 or any one of claims 5 to 8 when dependent on claim 4, further comprising a hinge unit configured to removably attach the plate element to the heating element (20).

10. A water guiding apparatus (60) according to claim 4 or any one of claims 5 to 9 when dependent on claim 4, further comprising a fastening unit configured to hold the plate element and the heating element (20) in place when the plate element is aligned with the heating element.

11. A water guiding apparatus (700, 800) according to claim 1, further comprising a conduit element (710, 810) configured to align along at least a part of the length of the heating element (25, 26) while the water guiding apparatus is coupled to the heating element, so as to guide water along at least a part of the heating element.

12. A water guiding apparatus (800) according to claim 11, wherein the conduit element (810) is open-faced.

13. A steam generating apparatus for use in a cooking device, the steam generating apparatus comprising:
the water guiding apparatus (60, 300, 400, 500, 600, 700, 800, 900) according to any one of the preceding claims; and
a heating element (20, 21, 22, 23, 24, 25, 26, 27) configured at least for convection heating in the cooking device.

14. A steam generating apparatus according to claim 13, further comprising a control unit configured to control the heating element based on at least one of a user input and a rate of water flow at the water guiding apparatus.

15. A steam generating apparatus according to claim 13 or claim 14, further comprising a lime scale collection unit connected to the water guiding apparatus, the lime scale collection unit being configured to collect lime scale from the water guiding apparatus.
